# FASCICULE DE BREVET EUROPEEN

(11) **EP 4 024 604 B1**
(45) Date de publication et mention de la délivrance du brevet: **03.09.2025**
(21) Numéro de dépôt: 21215865.3
(22) Date de dépôt: 20.12.2021
(51) Int. Cl.: H01P 5/20, H01P 11/00

(54) **JONCTION HYPERFRÉQUENCE EN TÉ MAGIQUE LARGE BANDE**
MAGISCHE BREITBAND-MIKROWELLEN-VERBINDUNG IN T-FORM
HYPERFREQUENCY JUNCTION IN BROADBAND MAGIC TEE

(30) Priorité: 30.12.2020 FR 2014259
(43) Date de publication de la demande: 06.07.2022
(73) Titulaire: THALES, 92400 Courbevoie (FR)
(72) Inventeur: BRU, Laurent, 31500 TOULOUSE (FR)
(74) Mandataire: Atout PI Laplace

(56) Documents cités:
- CN-A- 111 952 706
- CN-U- 206 610 891
- JP-A- S58 182 301
- WU JIE ET AL: "Ridged Waveguide Magic Tees Based on 3-D Printing Technology", IEEE TRANSACTIONS ON MICROWAVE THEORY AND TECHNIQUES, PLENUM, USA, vol. 68, no. 10, 15 July 2020 (2020-07-15), pages 4267 - 4275, XP011812548, ISSN: 0018-9480, [retrieved on 20201005], DOI: 10.1109/TMTT.2020.3006570

## Description

### Domaine technique :

L'invention se situe dans le domaine des composants hyperfréquence au sens large, principalement pour la technologie en ondes conduites. Elle porte plus particulièrement sur le perfectionnement d'une jonction de guides d'onde hyperfréquence connue de l'homme du métier sous le nom de jonction en T magique, pouvant être utilisée dans différents types de composants hyperfréquence, par exemple dans le domaine du spatial, des télécommunications, des faisceaux hertziens, etc...

### Technique antérieure :

Les jonctions hyperfréquences sont des composants bien connus à trois ports, réalisés à partir de guides d'onde et utilisés pour combiner ou diviser des signaux hyperfréquence.

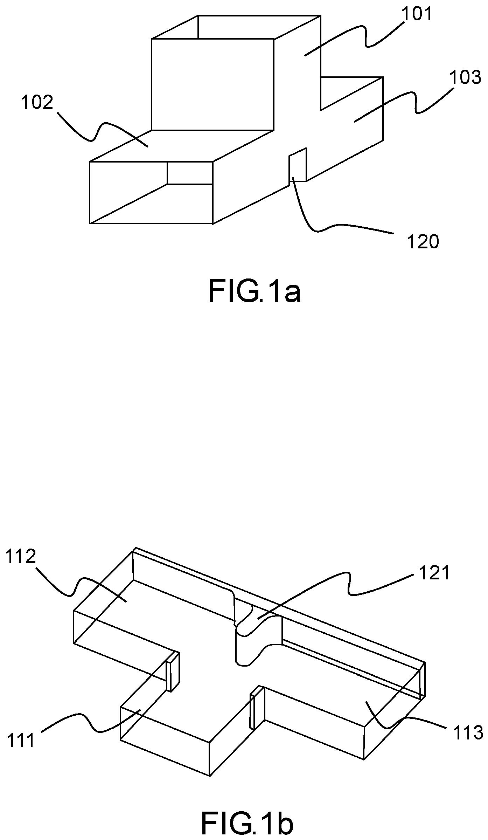

La figure 1a représente une jonction hyperfréquence dite en T plan E (en anglais *E-plane Tee*)*,* ou té plan E. Elle comprend trois ports par lesquels peuvent être injectés ou extraits des signaux. Elle est composée d'un bras 101 dit bras différence, et deux bras colinéaires 102 et 103, dits bras latéraux, les trois bras se rejoignant en un même point de manière à former un T. Dans les jonctions en T « plan E », le profil en T apparaît à travers le petit côté des guides d'onde, qui est dans un plan parallèle au champ électrique (champ E).

Un signal hyperfréquence injecté sur le bras différence 101 de la jonction en T plan E se retrouve divisé en deux signaux identiques mais en opposition de phase sur les bras latéraux 102 et 103. A l'inverse, l'injection de deux signaux sur les bras latéraux 102 et 103 résulte en la différence de ces signaux sur le bras différence 101.

La figure 1b représente une jonction hyperfréquence dite en T plan H (en anglais *H-plane Tee*), ou té plan H. Elle comprend trois ports par lesquels peuvent être injectés ou extraits des signaux. Elle est composée d'un bras 111, dit bras somme, et de deux bras colinéaires 112 et 113, dits bras latéraux, les trois bras se rejoignant en un même point de manière à former un T. Dans les jonctions en T « plan H », le profil en T apparaît à travers le grand côté des guides d'onde, qui est dans un plan parallèle au champ magnétique (champ H).

Un signal hyperfréquence injecté sur le bras somme 111 de la jonction en T plan H se retrouve divisé en deux signaux identiques et en phase sur les bras latéraux 112 et 113. A l'inverse, l'injection d'un signal sur les bras latéraux 112 et 113 résulte en la somme de ces signaux sur le bras somme 111.

Les jonctions en T plan E et plan H peuvent être utilisées en tant que coupleurs ou diviseurs. Cependant, leur structure à trois bras fait que l'adaptation des ports est imparfaite. Il est connu de l'état de la technique l'introduction d'éléments métalliques modifiant la géométrie des jonctions afin d'améliorer en partie l'adaptation des ports ou la bande de fréquence de fonctionnement de la jonction, par exemple le plot 120 de la figure 1a et le plot 121 de la figure 1b, ou des vis d'adaptation positionnées à la jonction des trois bras, mais sans pour autant qu'il soit possible d'atteindre des niveaux d'adaptation importants.

Sont également connues de l'état de la technique les jonctions hyperfréquence en T magique (en anglais *Magic Tee*), té magique, ou T hybride. Ces jonctions sont des jonctions à quatre ports réalisant à la fois la fonction de jonction en T plan E et la fonction de jonction en T plan H.

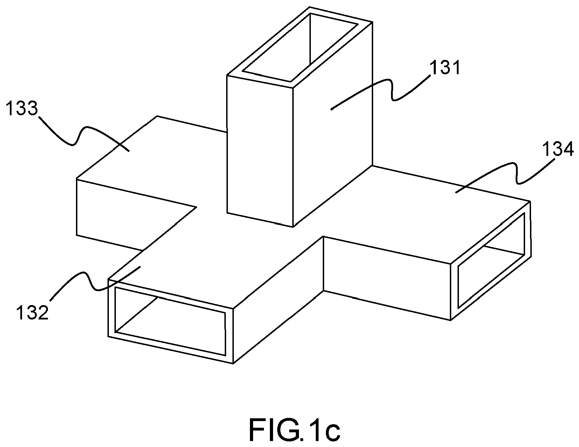

La figure 1c représente une jonction hyperfréquence dite en T magique. Elle comprend quatre ports par lesquels peuvent être injectés ou extraits des signaux. Elle est composée de deux bras perpendiculaires 131 et 132, dits bras différence et bras somme, et de deux bras colinéaires 133 et 134, dits bras latéraux. Les quatre guides d'onde se rejoignent en un même point. Ensemble, le bras différence 131, et les bras latéraux 133 et 134 réalisent la fonction de jonction hyperfréquence en T plan E. Le bras somme 132 et les bras latéraux 133 et 134 réalisent la fonction de jonction hyperfréquence en T plan H.

L'injection d'un signal sur le bras différence 131 de la jonction en T magique produit deux signaux identiques en opposition de phase sur les bras latéraux 133 et 134. Il ne se propage pas sur le bras somme 132 car les propriétés de symétrie du T magique lui confèrent une très bonne isolation entre les bras somme et différence (typiquement supérieure à 50dB). De manière identique, l'injection d'un signal sur le bras somme 132 de la jonction en T magique produit deux signaux identiques et en phase sur les bras latéraux 133 et 134. Ce signal ne se propage pas sur le bras différence 131.

La jonction hyperfréquence en T magique réalise donc simultanément les fonctions de coupleur plan E et de coupleur plan H. Elle est utilisée notamment pour le mélange d'ondes dans des émetteurs/récepteurs hyperfréquences. Une autre application courante est son utilisation en tant que diviseur de puissance hyperfréquence, en reliant par exemple le port différence à une charge configurée pour dissiper le signal qui lui est transmis puisque, contrairement aux jonctions en T à trois ports, la jonction hyperfréquence en T magique présente de très bons niveaux d'adaptation sur tous ses ports.

La demande de brevet JP S58.182301 A décrit un dispositif configuré pour diviser des signaux hyperfréquence comprenant une jonction en T magique et une jonction en T plan E. La demande de brevet CN 111.952.706 A décrit un combineur de signaux formé de deux T magiques reliés de manière symétrique à un T plan E. La demande de modèle d'utilité CN 206.610.891 U décrit un démultiplexeur en guides d'ondes formé à partir de T magiques.

Le défaut des jonctions hyperfréquence en T magique selon l'état de l'art est qu'elles ne fonctionnent que sur une bande de fréquence limitée, typiquement de l'ordre de 5% de la fréquence porteuse lorsque l'on souhaite une bonne adaptation des quatre ports.

L'ajout d'éléments métalliques tels que des plots ou des vis d'adaptation au point de liaison des guides d'onde d'une jonction hyperfréquence en T magique permet d'améliorer l'adaptation des ports et/ou la bande de fréquence de fonctionnement de la jonction. Cependant, les ajouts faits pour améliorer les performances dans un plan donné ont tendance à se répercuter négativement dans l'autre plan. La demande de brevet US 2013/0314172 A1 cherche à résoudre ce problème par l'utilisation d'une pointe au point de jonction des quatre bras de manière à créer un compromis géométrique entre la jonction plan E et la jonction plan H, mais cette pointe complique la fabrication de la jonction pour une amélioration limitée de la bande de fréquence de fonctionnement.

Lorsque la jonction hyperfréquence en T magique est utilisée comme diviseur de puissance en chargeant l'un de ses ports, il est possible de modifier ses propriétés en tolérant une adaptation moins performante pour le port chargé, de manière à améliorer l'adaptation des autres ports. Ce cas reporte néanmoins la complexité de réalisation sur la charge, qui doit être de meilleure qualité pour absorber l'énergie transmise sur un port mal adapté.

Un objet de l'invention est donc de répondre aux problèmes posés par l'état de l'art en décrivant une jonction hyperfréquence en T magique simple à réaliser et présentant de bons niveaux d'adaptation des ports (typiquement supérieure à -25 dB), une bonne isolation des ports somme et différence (typiquement supérieure à -50 dB) et une bande de fréquence de fonctionnement importante (typiquement supérieure ou égale à 15% de la fréquence centrale).

### Résumé de l'invention :

A cet effet, la présente invention décrit une jonction hyperfréquence en T magique comprenant un ensemble de guides d'onde configurés de manière à former :
- une première jonction hyperfréquence en T plan E comprenant un bras différence s'étendant le long d'un premier axe dans un plan de référence et deux bras colinéaires de mêmes longueurs et symétriques par rapport au plan de référence,
- une deuxième jonction hyperfréquence en T plan H comprenant un bras somme s'étendant le long d'un deuxième axe orthogonal au premier axe dans le plan de référence et deux bras colinéaires de mêmes longueurs et symétriques par rapport au plan de référence,
- deux premiers guides d'onde disposés de manière symétrique par rapport au plan de référence, chaque premier guide d'onde étant relié par une extrémité à l'extrémité d'un des bras colinéaires de la première jonction hyperfréquence et par l'autre extrémité à l'extrémité d'un des bras colinéaires de la deuxième jonction hyperfréquence,
- deux deuxièmes guides d'onde disposés de manière symétrique par rapport au plan de référence, chaque deuxième guide d'onde étant relié à un des premiers guides d'onde.

Dans la jonction hyperfréquence en T magique selon l'invention, le bras différence de la première jonction hyperfréquence forme le bras différence de la jonction hyperfréquence en T magique, le bras somme de la deuxième jonction hyperfréquence forme le bras somme de la jonction hyperfréquence en T magique, les deuxièmes guides d'onde forment les bras latéraux de la jonction hyperfréquence en T magique.

Avantageusement, un élément métallique est disposé dans la première jonction hyperfréquence au point de jonction entre le bras différence et les deux bras colinéaires de manière à ajuster ses propriétés et/ou dans la deuxième jonction hyperfréquence au point de jonction entre le bras somme et les deux bras colinéaires de manière à ajuster ses propriétés.

Avantageusement, un élément métallique est disposé à chaque jonction entre les premiers guides d'onde et les deuxièmes guides d'onde, de manière symétrique par rapport au plan de référence.

Avantageusement, les jonctions entre les bras colinéaires de la première jonction hyperfréquence et les premiers guides d'onde et/ou les jonctions entre les bras colinéaires de la deuxième jonction hyperfréquence et les premiers guides d'onde ont des dimensions ou formes géométriques configurées pour améliorer les caractéristiques d'adaptation d'impédance de la jonction hyperfréquence en T magique.

Est également décrit un diviseur de puissance hyperfréquence comprenant une jonction hyperfréquence en T magique selon l'invention, dont l'un des ports est terminé par une charge.

La jonction en T magique selon l'invention peut être utilisée pour réaliser un réseau de formateurs de faisceaux hyperfréquence comprenant une pluralité de jonctions hyperfréquence en T magique selon l'invention montées en cascade, l'un des ports de chaque jonction étant terminé par une charge.

L'invention porte également sur un procédé de réalisation d'un dispositif hyperfréquence par fabrication additive métallique, le procédé comprenant les étapes de :
- obtention d'un modèle informatique représentant la géométrie d'une jonction hyperfréquence selon l'invention ou d'une pluralité de jonctions hyperfréquence selon l'invention montées en cascade,
- contrôle d'un dispositif de fabrication additive métallique pour réaliser le produit correspondant à la géométrie spécifiée dans le modèle informatique.

L'invention porte également sur un produit programme d'ordinateur comprenant une série d'instructions exécutables par ordinateur qui, lorsqu'exécutées par un processeur, permettent au processeur de contrôler un dispositif de fabrication additive métallique pour réaliser une jonction hyperfréquence en T magique selon l'invention, ou une pluralité de jonctions hyperfréquences en T magique selon l'invention montées en cascade.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemples seulement, parmi lesquelles :
- la figure 1a représente une jonction hyperfréquence dite en T plan E selon l'état de l'art ;
- la figure 1b représente une jonction hyperfréquence dite en T plan H selon l'état de l'art ;
- la figure 1c représente une jonction hyperfréquence dite en T magique selon l'état de l'art ;
- la figure 2a représente un premier mode de réalisation d'une jonction hyperfréquence en T magique selon l'invention, dans une vue de face ;
- la figure 2b représente l'orientation du champ électrique de signaux appliqués sur l'entrée différence et sur l'entrée somme d'une jonction hyperfréquence en T magique telle que celle représentée à la figure 2a ;
- la figure 2c est une vue en perspective du dispositif de la figure 2a ;
- la figure 2d est une vue en perspective du dispositif de la jonction hyperfréquence en T magique de la figure 2a, dans laquelle des éléments ont été modifiés pour améliorer les performances ;
- la figure 2e donne les niveaux d'adaptation des ports obtenue pour une jonction hyperfréquence en T magique selon le mode de réalisation donné à la figure 2d ;
- la figure 3a représente un autre mode de réalisation d'une jonction hyperfréquence en T magique selon l'invention ;
- la figure 3b représente un autre mode de réalisation d'une jonction hyperfréquence en T magique selon l'invention ;
- la figure 3c représente un autre mode de réalisation d'une jonction hyperfréquence en T magique selon l'invention ;
- la figure 3d représente un autre mode de réalisation d'une jonction hyperfréquence en T magique selon l'invention ;
- la figure 4 représente un autre mode de réalisation d'une jonction hyperfréquence en T magique selon l'invention ;
- la figure 5 représente un mode de réalisation d'un diviseur de puissance impliquant une jonction hyperfréquence selon un mode de réalisation de l'invention ;
- la figure 6 représente un réseau de formateurs de faisceaux utilisant des jonctions hyperfréquence en T magique selon un mode de réalisation de l'invention.

Des références identiques peuvent être utilisées dans des figures différentes lorsqu'elles désignent des éléments identiques ou comparables.

### Description détaillée :

La jonction hyperfréquence en T magique selon l'invention parvient à l'effet recherché en séparant la jonction unique des jonctions en T magique selon l'état de l'art en une jonction trois ports en T plan E et une jonction trois ports en T plan H. Ce dédoublement résout le problème de l'optimisation conjointe des ports « somme » et « différence », qui peuvent alors être optimisés indépendamment l'un de l'autre, sans que les améliorations apportées à l'une ne se répercutent sur l'autre. De cette manière, la jonction en T magique selon l'invention peut être optimisée très simplement et très efficacement, puisque tous les paramètres sont accessibles et peuvent être ajustés. Cela permet de lui conférer une plus grande largeur de bande et une meilleure adaptation que les jonctions en T magique selon l'état de l'art. Par ailleurs, sa structure à quatre ports permet de garantir une bonne adaptation de l'ensemble des ports et une bonne isolation des ports somme et différence.

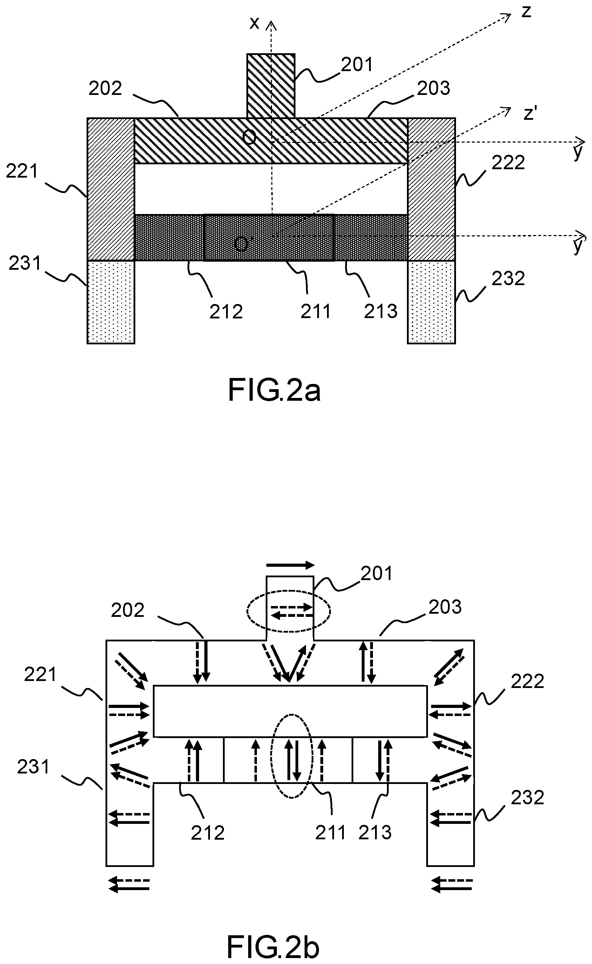

La figure 2a représente un premier mode de réalisation d'une jonction hyperfréquence en T magique selon l'invention, dans une vue de face. Comme toutes les jonctions en T magique, elle comprend un bras somme 211, un bras différence 201, et deux bras latéraux 231 et 232.

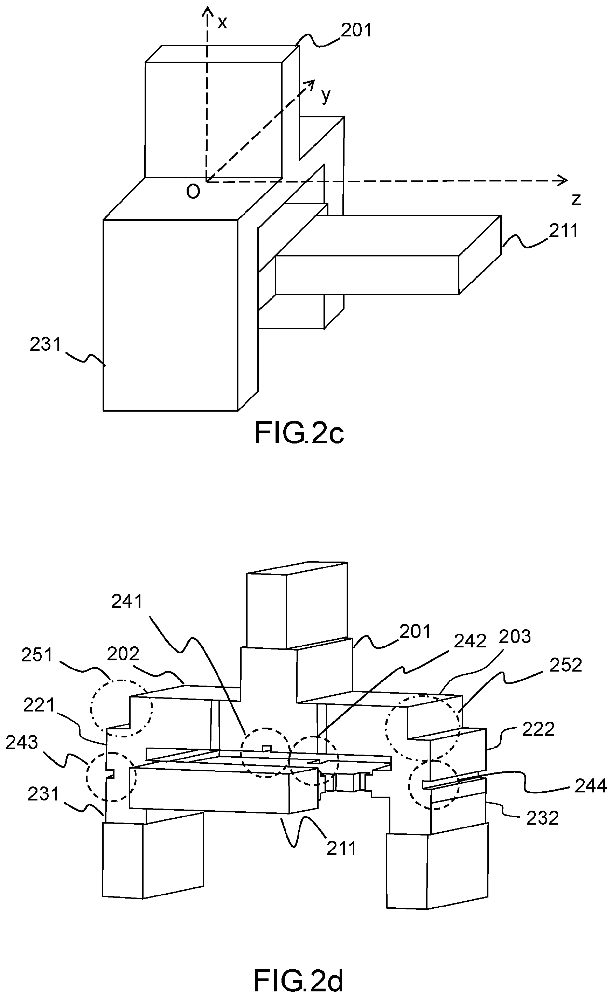

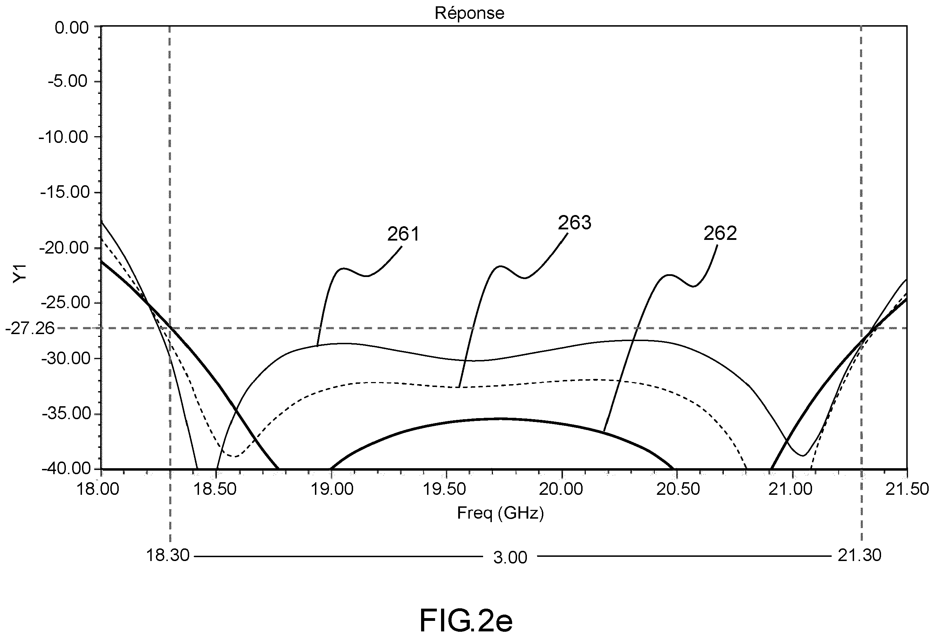

La jonction hyperfréquence en T magique selon l'invention comprend un ensemble de guides d'onde configurés de manière à former :
- une première jonction hyperfréquence en T plan E, représentée dans un repère orthonormé Oxyz, comprenant un bras différence 201 et deux bras colinéaires 202 et 203 de mêmes longueurs. Les deux bras colinéaires 202 et 203 sont symétriques par rapport à un plan de référence (xOz) dans lequel le bras différence s'étend le long d'un premier axe (Ox). Les bras colinéaires s'étendent longitudinalement selon l'axe Oy ;
- une deuxième jonction hyperfréquence en T plan H, représentée dans le repère orthonormé O'xy'z', comprenant un bras somme 211 et deux bras colinéaires 212 et 213. Le bras somme 211 s'étend longitudinalement selon l'axe O'z', orthogonal à l'axe Ox dans lequel s'étend le bras différence 201, c'est pourquoi il n'est pas visible sur la figure en vue de face. Les bras colinéaires 212 et 213 sont de mêmes longueurs, et sont symétriques par rapport au plan de référence xOz (ou par rapport au plan xO'z') ;
- deux premiers guides d'onde 221 et 222, disposés de manière symétrique par rapport au plan de référence xOz. Chaque premier guide d'onde est relié par une extrémité à l'extrémité d'un des bras colinéaires de la première jonction hyperfréquence et par l'autre extrémité à l'extrémité d'un des bras colinéaires de la deuxième jonction hyperfréquence. Par exemple, le guide d'onde 221 est relié par ses deux extrémités aux extrémités des guides d'onde 202 et 212 ; et
- deux deuxièmes guides d'onde 231 et 232, les deux deuxièmes guides d'onde étant chacun relié à un des premiers guides d'onde 221 et 222 de manière symétrique par rapport au plan de référence xOz. Dans l'exemple de la figure 2, les deuxièmes guides d'onde prolongent les guides d'onde 221 et 222.

L'ensemble forme une jonction hyperfréquence en T magique dont le bras différence 201 de la première jonction en T plan E constitue le bras différence, le bras somme 211 de la deuxième jonction en T plan H constitue le bras somme, et les deux deuxièmes bras 231 et 232 constituent les bras latéraux.

Le mode de réalisation de la figure 2a est donné à titre d'illustration, de nombreux autres modes de réalisation agencés sur les mêmes principes de séparation des jonction en T plan E et plan H et de structure symétrique permettant d'obtenir le même résultat.

Bien que le dispositif de la figure 2a soit décrit sous la forme d'un assemblage de jonctions et de guides d'onde distincts, cette description est purement fonctionnelle, dans le but de présenter les caractéristiques de la jonction selon l'invention. Plusieurs guides d'onde peuvent être réalisés d'une seule pièce, par exemple les bras colinéaires des jonctions hyperfréquence (par exemple les guides 202 et 203), ou les premiers et deuxièmes guides d'onde (par exemple les guides 221 et 231). Le dispositif peut également être réalisé en plusieurs parties réalisées par fraisage puis assemblées, ou d'un seul bloc, par exemple par fabrication additive métallique.

La fabrication additive fait référence à un procédé d'impression en trois dimensions dans lequel des couches successives de matériau sont fusionnées pour produire un composant. Pour la réalisation de guides d'onde, le matériau utilisé est un matériau métallique. La fabrication additive métallique rend simple la réalisation de pièces qui auraient autrement été complexes voire impossibles à réaliser. Elle permet de fabriquer des composants à partir d'un modèle informatique à trois dimensions du composant. L'article de Wu Jie et Al. « Ridged waveguide magic tees based on 3-D printing technology », IEEE transactions on microwave theory and techniques, vol. 68, no. 10, 1 octobre 2020, pages 4267-4275, porte sur la réalisation d'un Té magique à nervures selon l'état de l'art en fabrication additive. L'invention porte donc à la fois sur une jonction hyperfréquence en T magique selon l'invention, réalisée ou non en fabrication additive, mais également sur une méthode de réalisation de la jonction hyperfréquence utilisant la fabrication additive, ainsi que sur le modèle informatique contenant le design en trois dimensions de la jonction hyperfréquence, c'est-à-dire sa représentation géométrique. Ce modèle informatique peut être ensuite converti en une suite d'instructions exécutables par un processeur pour contrôler un dispositif de fabrication additive métallique et réaliser le produit correspondant au modèle.

Le dispositif selon l'invention forme un ensemble équilibré et symétrique, aux propriétés particulièrement intéressantes en termes d'adaptation et d'isolation des ports.

La figure 2b représente l'orientation du champ électrique de signaux injectés respectivement sur l'entrée différence 201 et sur l'entrée somme 211 d'une jonction hyperfréquence en T magique telle que celle représentée à la figure 2a.

Les traits en flèches pleines représentent la direction du champ électrique d'un signal injecté sur le port différence 201 de la jonction hyperfréquence. S'agissant d'une jonction en T plan E, le signal se propage sous la forme de deux signaux identiques et en opposition de phase dans les bras colinéaires 202 et 203. De par la symétrie des premiers guides d'onde 221 et 222, les signaux continuent ensuite à se propager à l'identique. Les guides d'onde 221, 212 et 231 (et respectivement 222, 213 et 232) forment ensemble une jonction en T plan E, de sorte que les signaux transmis dans les guides d'onde 212 et 213 sont identiques et en opposition de phase. Ces signaux s'annulent lors de leur recombinaison dans le port somme 211 de la deuxième jonction hyperfréquence, ce qui garantit une isolation importante du port somme 211 par rapport au signal injecté sur le port différence 201.

Les traits en pointillés représentent la direction du champ électrique d'un signal injecté sur le port somme 211 de la jonction hyperfréquence. S'agissant d'une jonction en T plan H, le signal se propage sous la forme de deux signaux identiques et en phase dans les bras colinéaires 212 et 213. De par la symétrie des guides d'onde, les signaux qui arrivent dans les bras 202 et 203 sont identiques et en phase. Ils s'annulent lors de leur recombinaison dans le bras différence 201 de la première jonction hyperfréquence, garantissant ainsi l'isolation du port différence par rapport au signal injecté sur le port somme.

La figure 2c est une vue en perspective du dispositif de la figure 2a, sur laquelle il est possible de distinguer le bras différence 201, le bras somme 211 et le bras latéral 231.

La figure 2d est une vue en perspective du dispositif de la jonction hyperfréquence en T magique de la figure 2a, dans laquelle des éléments métalliques ont été ajoutés pour améliorer les performances.

Dans ce mode de réalisation, des plots 241 et 242 ont été ajoutés au niveau du point de liaison des guides d'onde de la première et de la deuxième jonction hyperfréquence en T à trois bras. L'ajout de plots au point de jonction des bras d'une jonction hyperfréquence à trois bras permet de modifier ses propriétés de fonctionnement, et en particulier d'élargir la bande de fonctionnement et d'ajuster l'adaptation des ports. Comme indiqué précédemment, l'ajout de tels plots est peu efficace dans les jonctions hyperfréquences en T magique selon l'état de l'art, car les améliorations apportées dans un plan ont tendance à dégrader les caractéristiques dans l'autre plan. Ce n'est pas le cas pour la jonction hyperfréquence en T magique selon l'invention, puisque la jonction en T plan E et la jonction en T plan H sont séparées. Leurs propriétés peuvent donc être ajustées indépendamment, sans que ces ajustements n'affectent l'autre jonction : la jonction hyperfréquence en T magique selon l'invention peut donc être réglée très facilement en fonction des performances recherchées, en particulier en termes de bande passante de fonctionnement et de niveau d'adaptation des ports. Un résultat similaire pourrait être obtenu en utilisant des éléments métalliques équivalents aux plots tels que par exemple des vis de réglage.

En outre, dans le mode de réalisation de la figure 2a, l'ensemble formé par les guides d'onde 221, 231 et 212 (et respectivement 222, 232 et 213) peut être assimilé à une jonction en T plan E, qui peut également être optimisée en bande et en adaptation en y ajoutant des éléments métalliques telles que le plot 243 (et respectivement 244).

Indépendamment de l'ajout de plots, les jonctions entre les différents guides d'onde peuvent être optimisées de manière à améliorer l'adaptation d'impédance, par exemple en rajoutant des iris, des marches sur les coudes (comme c'est le cas en 251 pour la liaison entre les guides d'onde 202 et 221, ou en 252 pour la liaison entre les guides d'onde 203 et 222), ou en faisant varier les dimensions des sections des guides d'onde.

La figure 2e donne les niveaux d'adaptation des ports obtenus pour une jonction hyperfréquence en T magique selon le mode de réalisation donné à la figure 2d, obtenus par simulation. La courbe 261 correspond à l'adaptation sur le port somme, la courbe 262 correspond à l'adaptation pour le port différence, et la courbe 263 correspond à l'adaptation sur les deux ports latéraux (les courbes correspondant à chacun des ports latéraux sont identiques de par les propriétés de symétrie du dispositif). On observe que l'adaptation des quatre ports de la jonction en T magique est meilleure que -27 dB sur la bande 18.3 GHz - 21.3 GHz, soit pour une largeur de bande d'environ 15% de la fréquence porteuse, ce qui correspond aux performances recherchées. En outre, l'isolation entre le port somme et le port différence est très bonne puisqu'elle est inférieure à -75 dB sur l'ensemble de cette bande de fréquences.

La jonction hyperfréquence en T magique selon l'invention permet donc d'obtenir des niveaux d'adaptation des ports et des largeurs de bande de fonctionnement bien supérieures à celles obtenues avec les jonctions hyperfréquences en T magique selon l'état de l'art, tout en conservant une très bonne isolation des ports. L'indépendance de la jonction en T plan E et de la jonction en T plan H fait que les performances globales peuvent être adaptées au contexte d'utilisation en jouant sur les tailles et les formes d'éléments métalliques insérés dans le dispositif. Cette optimisation peut être réalisée très simplement et rapidement sur simulateur selon les techniques connues de l'homme du métier pour les jonctions hyperfréquences à trois ports. En outre, le dispositif selon l'invention a l'avantage d'être très simple géométriquement et très compact, donc peu lourd et peu encombrant, son empreinte n'étant que très légèrement supérieur à celle d'un T magique selon l'état de l'art.

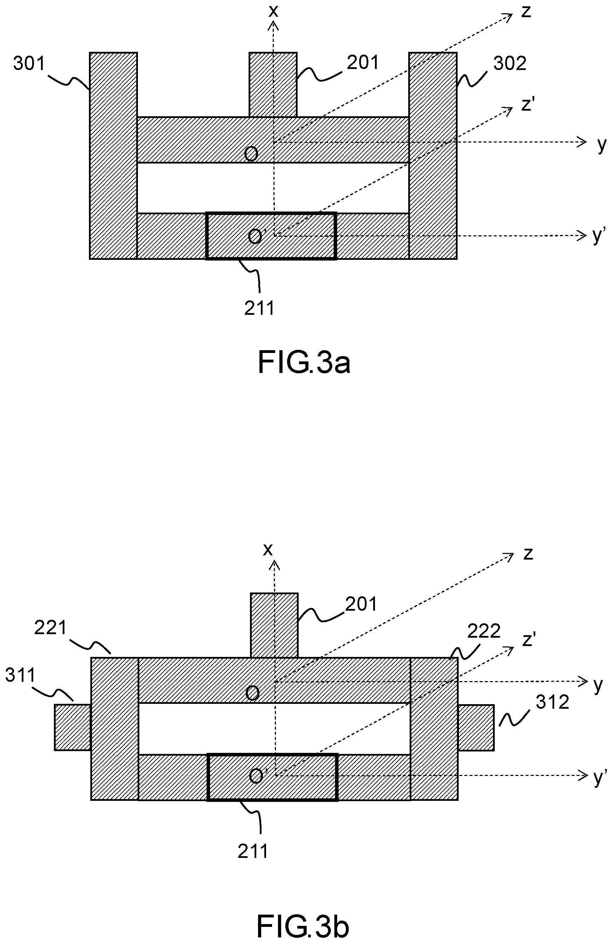

Les figures 3a à 3d présentent différents modes de réalisation d'une jonction hyperfréquence en T magique selon l'invention, donnés à titre d'illustration seulement. La liste des configurations proposées n'est pas exhaustive : le dispositif selon l'invention peut être mis en œuvre dès lors qu'il comprend une jonction hyperfréquence à trois ports en T plan E et une jonction hyperfréquence à trois ports en T plan H séparées et agencées de manière à être chacune symétrique par rapport à un même plan, et dont les extrémités des bras colinéaires sont reliées par des guides d'onde agencés de manière symétrique par rapport au plan dans lesquels sont fixés des guides d'onde formant les bras latéraux de la jonction hyperfréquence. Un très grand nombre de variations est donc possible dès lors que ces conditions sont respectées.

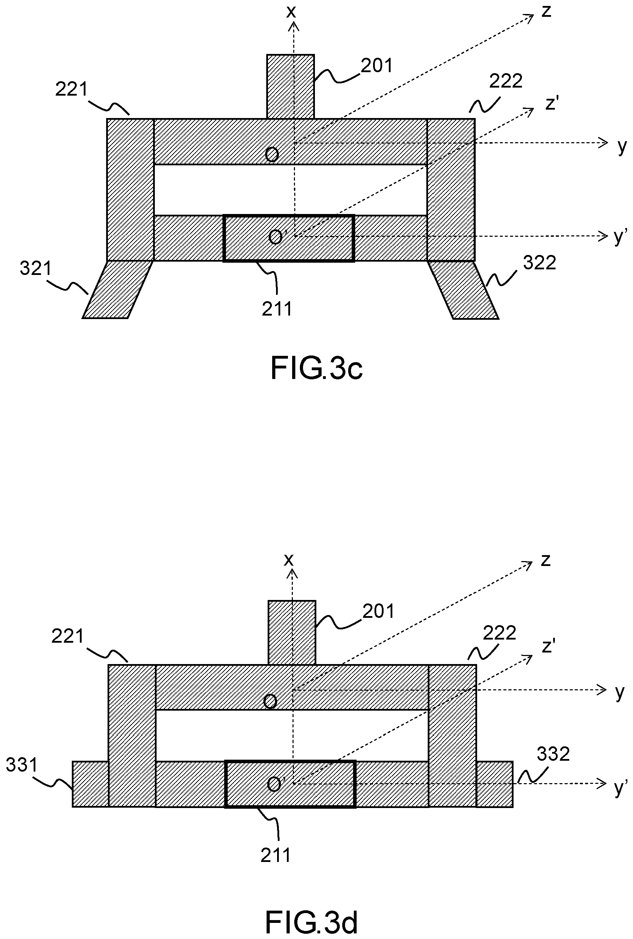

Dans le mode de réalisation de la figure 3a, les deuxièmes guides d'onde 301 et 302 sont disposés au-dessus des premiers guides d'onde, de manière à les étendre. Dans le mode de réalisation de la figure 3b, les deuxièmes guides d'onde 311 et 312 sont disposés sur les côtés des guides d'onde 221 et 222. Dans le mode de réalisation de la figure 3c, les deuxièmes guides d'onde 321 et 322 sont disposés sous les premiers guides d'onde 221 et 222, de manière à les étendre, mais ne sont pas alignés avec ces derniers. Ils restent cependant disposés de manière symétrique par rapport au plan xOz. Dans le mode de réalisation de la figure 3d, les deuxièmes guides d'onde 331 et 332 sont disposés sur un bord des premiers guides d'onde 221 et 222, ce qui correspond à une version décentrée du dispositif de la figure 3b.

Dans l'ensemble des modes de réalisation présentés, les bras colinéaires de la première et de la deuxième jonction sont de tailles identiques. Cependant, l'invention peut également être mise en œuvre lorsque les bras colinéaires de la jonction hyperfréquence plan E sont de tailles différentes des bras colinéaires de la jonction hyperfréquence plan H, dès lors que les conditions de symétrie sont respectées. De même, dans les exemples donnés, les deuxièmes guides d'onde sont positionnés dans le plan E, mais pourraient également être positionnés dans le plan H, par exemple en s'étendant dans une direction parallèle au bras différence 211.

Enfin, des éléments métalliques peuvent être ajoutées au niveau de la jonction plan E et/ou de la jonction plan H pour adapter leurs performances, à la manière des plots 241 et 242 de la figure 2d. Des éléments métalliques peuvent également être ajoutés à la jonction entre les premiers et les deuxièmes guides d'onde de manière à ajuster l'adaptation des ports latéraux et la largeur de bande de la jonction en T magique selon l'invention, à la manière des plots 243 et 244 de la figure 2d. Les plots 243 et 244 doivent cependant être symétriques par rapport au plan xOz.

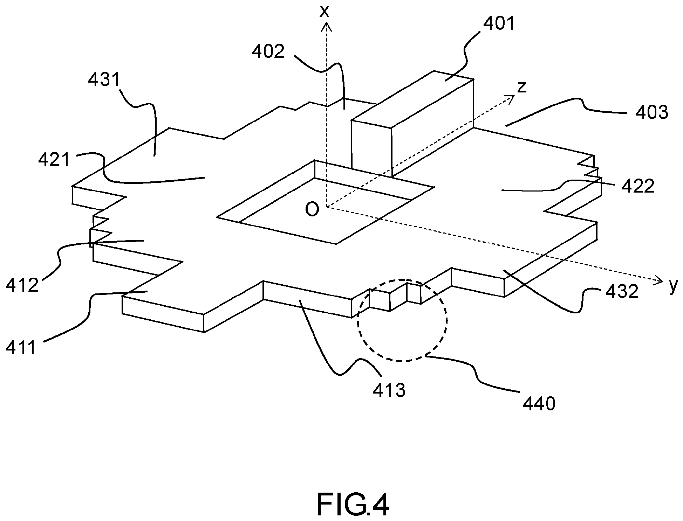

La figure 4 présente un autre mode de réalisation d'une jonction hyperfréquence en T magique selon l'invention, dans lequel les jonctions hyperfréquences à trois ports sont disposées côte à côte dans le plan yOz, et non plus superposées, toujours de manière à ce que chacune d'elle ait ses deux bras colinéaires disposés de manière symétrique par rapport au plan xOz.

La jonction hyperfréquence en T magique comprend alors un ensemble de guides d'onde configurés de manière à former :
- une première jonction hyperfréquence en T plan E comprenant un bras différence 401 et deux bras colinéaires 402 et 403 de mêmes longueurs. Les deux bras colinéaires 402 et 403 sont symétriques par rapport au plan xOz, dans lequel le bras différence s'étend selon un premier axe Ox;
- une deuxième jonction hyperfréquence en T plan H comprenant un bras somme 411 et deux bras colinéaires 412 et 413. Le bras somme 411 s'étend longitudinalement selon l'axe Oz, orthogonal à l'axe Ox dans lequel s'étend le bras différence 401. Les bras colinéaires 412 et 413 sont de mêmes longueurs, et sont symétriques par rapport au plan de référence xOz ;
- deux premiers guides d'onde 421 et 422, disposés de manière symétrique par rapport au plan de référence xOz et reliés à l'extrémité des bras colinéaires de la première jonction hyperfréquence et de la deuxième jonction hyperfréquence ; et
- deux deuxièmes guides d'onde 431 et 432 respectivement reliés à un des premiers guides d'onde 421 et 422, de manière symétrique par rapport au plan de référence xOz. Dans l'exemple de la figure 4, les deuxièmes guides d'onde sont disposés sur les côtés des guides d'onde 421 et 422, mais de nombreux autres agencements sont possibles, dans le plan E comme dans le plan H.

Avantageusement, les jonctions entre les bras colinéaires de la première et de la deuxième jonction hyperfréquence et les premiers guides d'onde sont mis en œuvre sous la forme de marches permettant d'améliorer l'adaptation des ports, comme par exemple les marches 440 sur la figure 4.

Tout comme la représentation de la figure 2a, la représentation de la figure 4 peut être modifiée de nombreuses façons à partir des enseignements apportés précédemment, en particulier en ce qui concerne le positionnement des deuxièmes guides d'onde.

La jonction hyperfréquence selon l'invention est très compacte et présente une très bonne adaptation de l'ensemble des ports, sur une large bande de fréquence. Elle peut donc être utilisée dans un grand nombre d'applications, comme par exemple en tant que diviseur de puissance compact pour un équipement hyperfréquence.

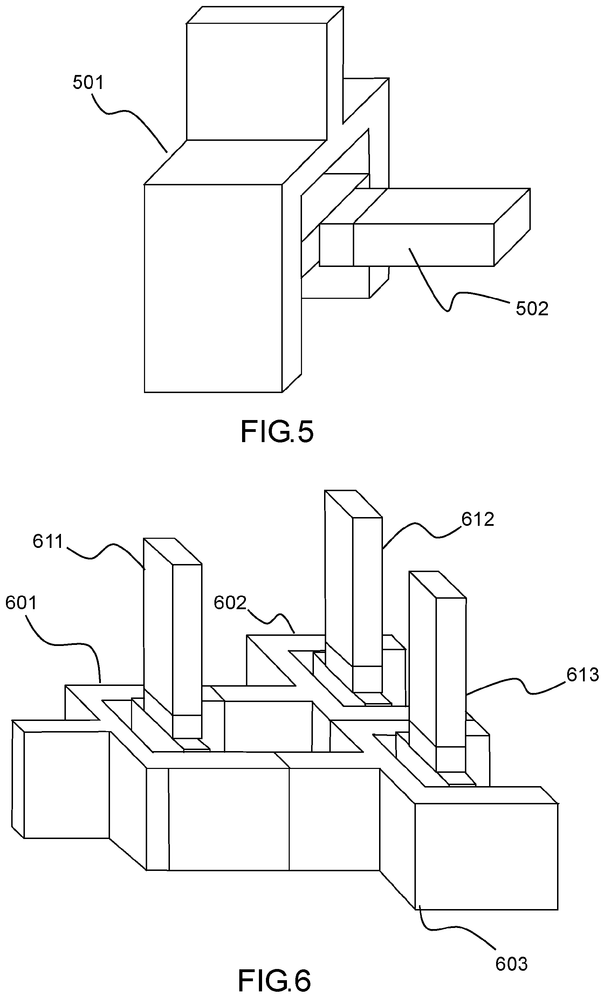

La figure 5 représente un mode de réalisation d'un diviseur de puissance impliquant une jonction hyperfréquence selon un mode de réalisation de l'invention. Il comprend une jonction hyperfréquence en T magique selon l'invention 501, dont l'un des ports, ici le port somme, est terminé par une charge 502. Les charges (en anglais *load* ou *termination load*) sont des composants hyperfréquence destinés à transformer une énergie électromagnétique qui leur est transmise en énergie thermique afin de la dissiper. Elles permettent de faire disparaitre des signaux n'ayant pas d'intérêt. On en trouve par exemple fréquemment en association avec des coupleurs, afin d'orienter la puissance du signal, ou avec des circulateurs configurés pour jouer le rôle d'isolateurs.

La solution la plus répandue de l'état de l'art pour réaliser une charge hyperfréquence consiste à insérer dans une portion de guide d'onde court-circuitée un matériau absorbant tel que le carbure de silicium (SIC) ou l'Eccosorb^{™}, matériau rigide composé de barres ou de feuilles d'époxydes chargées magnétiquement. Un diviseur de puissance peut donc être réalisé facilement en branchant une telle charge en sortie d'un des ports de l'isolateur selon l'invention.

Comme indiqué précédemment, la jonction hyperfréquence en T magique selon l'invention peut être réalisée d'une seule pièce par fabrication additive métallique, ce qui a l'avantage de permettre sa réalisation rapide, à faible coût et en grande quantité. En effet, certains composants, comme par exemple les réseaux de formateurs de faisceaux (en anglais *beamforming network*) d'une antenne réseau, pour satellite ou pour toute autre application nécessitant l'utilisation d'une antenne dont le faisceau peut être dirigé numériquement, requièrent un très grand nombre de diviseurs de puissance cascadés. La complexité de fabrication de la jonction est donc un critère important. En outre, la fabrication additive rend possible la réalisation en un seul bloc d'une série de jonctions en T magique destinées à être reliées à des charges pour former un réseau de formateurs de faisceaux.

La figure 6 représente un réseau de formateurs de faisceaux utilisant des jonctions hyperfréquence en T magique selon un mode de réalisation de l'invention. Dans l'exemple, donné à titre d'illustration seulement, il comprend trois jonctions hyperfréquence selon l'invention 601, 602 et 603 montées en cascade, dont l'un des ports est chargé par une charge 611, 612 et 613 afin de réaliser un formateur de faisceaux. Un tel réseau de jonctions hyperfréquence montées en cascade peut être fabriqué très rapidement et à faible coût en fabrication additive, tout en présentant d'excellentes performances.

L'invention porte également sur un procédé de réalisation d'une jonction hyperfréquence en T magique ou d'un réseau de jonctions hyperfréquence en T magique par fabrication additive métallique, le procédé comprenant les étapes de :
- obtention d'un modèle informatique représentant la géométrie d'une jonction hyperfréquence en T magique ou d'un réseau de jonctions hyperfréquence en T magique selon l'invention,
- contrôle d'un dispositif de fabrication additive métallique pour réaliser le produit correspondant à la géométrie spécifiée dans le modèle informatique.

Plus précisément, le modèle informatique est un fichier pouvant être obtenu par modélisation logicielle (en anglais Computer Aided Design, ou CAD) et/ou par balayage de la surface de la jonction hyperfréquence selon l'invention (ou réseau de jonctions) pour mesurer sa configuration surfacique (en anglais *scanning*). De nombreux formats de fichiers sont possibles, comme par exemple les fichiers de type Stereolithography ou "Standard Tessellation Language" (fichiers .stl), Additive Manufacturing File (fichiers .amf), AutoCad ( fichiers .dwg), Blender (fichiers .blend), Parasolid (fichiers .x_t), 3D Manufacturing Format (fichiers .3mf), Autodesk (fichiers 3ds), Collada (fichiers .dae) and Wavefront (fichiers .obj), entre autres.

Le fichier électronique peut être enregistré sous différents formats, et enregistré sur un support de stockage apte à être lu par un ordinateur.

Une fois obtenu, le fichier électronique peut être converti en un ensemble d'instructions exécutables par un processeur, lui permettant de contrôler un dispositif de fabrication additive afin de produire la jonction ou le réseau de jonctions selon l'arrangement géométrique considéré. La conversion peut consister à convertir le fichier en un ensemble de couches devant être formées séquentiellement par le dispositif de fabrication additive. Le dispositif de fabrication additive (imprimante 3D) exécute les instructions qui lui sont transmises pour fabriquer la charge selon l'invention. L'invention porte donc également sur un programme d'ordinateur comprenant une série d'instructions exécutables qui, lorsqu'exécutées par un processeur, permettent au processeur de contrôler un dispositif de fabrication additive métallique pour réaliser une jonction hyperfréquence en T magique selon l'invention, tel que représenté à la figure 5, ou un réseau de jonctions hyperfréquence en T magique montées en cascade, tel que représenté à la figure 6. La jonction et le réseau de jonctions peuvent être associés à une ou plusieurs charges de manière à former un diviseur de puissance ou un réseau de formateurs de faisceaux tels que décrits précédemment.

## Revendications

1. Jonction hyperfréquence en T magique comprenant un ensemble de guides d'onde configurés de manière à former :
- une première jonction hyperfréquence en T plan E comprenant un bras différence (201, 401) s'étendant le long d'un premier axe (Ox) dans un plan de référence (xOz) et deux bras colinéaires (202, 203, 402, 403) de mêmes longueurs et symétriques par rapport au plan de référence,
- une deuxième jonction hyperfréquence en T plan H comprenant un bras somme (211, 411) s'étendant le long d'un deuxième axe (O'z', Oz) orthogonal au premier axe (Ox) dans le plan de référence (xOz) et deux bras colinéaires (212, 213, 412, 413) de mêmes longueurs et symétriques par rapport au plan de référence,
- deux premiers guides d'onde (221, 222, 421, 422) disposés de manière symétrique par rapport au plan de référence (xOz), chaque premier guide d'onde étant relié par une extrémité à l'extrémité d'un des bras colinéaires de la première jonction hyperfréquence et par l'autre extrémité à l'extrémité d'un des bras colinéaires de la deuxième jonction hyperfréquence,
- deux deuxièmes guides d'onde (231, 232, 431, 432) disposés de manière symétrique par rapport au plan de référence (xOz), chaque deuxième guide d'onde étant relié à un des premiers guides d'onde,
le bras différence de la première jonction hyperfréquence formant le bras différence de la jonction hyperfréquence en T magique, le bras somme de la deuxième jonction hyperfréquence formant le bras somme de la jonction hyperfréquence en T magique, les deuxièmes guides d'onde formant les bras latéraux de la jonction hyperfréquence en T magique.

2. Jonction hyperfréquence en T magique selon la revendication 1, dans laquelle un élément métallique (241, 242) est disposé dans la première jonction hyperfréquence au point de jonction entre le bras différence (201) et les deux bras colinéaires (202, 203) de manière à ajuster ses propriétés et/ou dans la deuxième jonction hyperfréquence au point de jonction entre le bras somme (211) et les deux bras colinéaires (212, 213) de manière à ajuster ses propriétés.

3. Jonction hyperfréquence en T magique selon l'une des revendications précédentes, dans laquelle un élément métallique (243, 244) est disposé à chaque jonction entre les premiers guides d'onde (221, 222) et les deuxièmes guides d'onde (231, 232), de manière symétrique par rapport au plan de référence.

4. Jonction hyperfréquence en T magique selon l'une des revendications précédentes, dans lequel les jonctions entre les bras colinéaires (202, 203, 402, 403) de la première jonction hyperfréquence et les premiers guides d'onde (221, 222, 421, 422) et/ou les jonctions entre les bras colinéaires (212, 213, 412, 413) de la deuxième jonction hyperfréquence et les premiers guides d'onde (221, 222, 421, 422) comprennent des iris ou des marches sur les coudes (251, 252, 440).

5. Diviseur de puissance hyperfréquence **caractérisé en ce qu'**il comprend une jonction hyperfréquence en T magique (501) selon l'une des revendications 1 à 4, dont l'un des ports est terminé par une charge (502).

6. Réseau de formateurs de faisceaux hyperfréquence **caractérisé en ce qu'**il comprend une pluralité de jonctions hyperfréquence en T magique (601, 602, 603) selon l'une des revendications 1 à 4 montées en cascade, l'un des ports de chaque jonction hyperfréquence en T magique étant terminé par une charge (611, 612, 613).

7. Procédé de réalisation d'un dispositif hyperfréquence par fabrication additive métallique, le procédé comprenant les étapes de :
- obtention d'un modèle informatique représentant la géométrie d'une jonction hyperfréquence selon l'une des revendications 1 à 4 ou d'une pluralité de jonctions hyperfréquence selon l'une des revendications 1 à 4 montées en cascade,
- contrôle d'un dispositif de fabrication additive métallique pour réaliser le produit correspondant à la géométrie spécifiée dans le modèle informatique.

8. Produit programme d'ordinateur comprenant une série d'instructions exécutables par ordinateur qui, lorsqu'exécutées par un processeur, permettent au processeur de contrôler un dispositif de fabrication additive métallique pour réaliser une jonction hyperfréquence en T magique selon l'une des revendications 1 à 4, ou une pluralité de jonctions hyperfréquences en T magique selon l'une des revendications 1 à 4 montées en cascade.

## Patentansprüche

1. Mikrowellenverzweigung in Form eines magischen T, umfassend einen Satz von Wellenleitern, die dafür konfiguriert sind, Folgendes zu bilden:
- eine erste Mikrowellenverzweigung in der E-Ebene in T-Form, umfassend einen Differenzarm (201, 401), der sich entlang einer ersten Achse (Ox) in einer Referenzebene (xOz) erstreckt, und zwei kollineare Arme (202, 203, 402, 403) von gleicher Länge und in Bezug auf die Referenzebene symmetrisch,
- eine zweite Mikrowellenverzweigung in der H-Ebene in T-Form, umfassend einen Summenarm (211, 411), der sich entlang einer zweiten Achse (O'z', Oz) orthogonal zur ersten Achse (Ox) in der Referenzebene (xOz) erstreckt, und zwei kollineare Arme (212, 213, 412, 413) von gleicher Länge und in Bezug auf die Referenzebene symmetrisch,
- zwei erste Wellenleiter (221, 222, 421, 422), die symmetrisch in Bezug auf die Referenzebene (xOz) angeordnet sind, wobei jeder erste Wellenleiter an einem Ende mit dem Ende eines der kollinearen Arme der ersten Mikrowellenverzweigung verbunden ist und an dem anderen Ende mit dem Ende eines der kollinearen Arme der zweiten Mikrowellenverzweigung verbunden ist,
- zwei zweite Wellenleiter (231, 232, 431, 432), die symmetrisch in Bezug auf die Referenzebene (xOz) angeordnet sind, wobei jeder zweite Wellenleiter mit einem der ersten Wellenleiter verbunden ist,
wobei der Differenzarm der ersten Mikrowellenverzweigung den Differenzarm der Mikrowellenverzweigung in Form eines magischen T bildet, wobei der Summenarm der zweiten Mikrowellenverzweigung den Summenarm der Mikrowellenverzweigung in Form eines magischen T bildet, wobei die zweiten Wellenleiter die seitlichen Arme der Mikrowellenverzweigung in Form eines magischen T bilden.

2. Mikrowellenverzweigung in Form eines magischen T nach Anspruch 1, wobei ein metallisches Element (241, 242) in der ersten Mikrowellenverzweigung am Verzweigungspunkt zwischen dem Differenzarm (201) und den beiden kollinearen Armen (202, 203) so angeordnet ist, dass seine Eigenschaften angepasst werden, und/oder in der zweiten Mikrowellenverzweigung am Verzweigungspunkt zwischen dem Summenarm (211) und den beiden kollinearen Armen (212, 213) so angeordnet ist, dass seine Eigenschaften angepasst werden.

3. Mikrowellenverzweigung in Form eines magischen T nach einem der vorhergehenden Ansprüche, wobei ein metallisches Element (243, 244) an jeder Verzweigung zwischen den ersten Wellenleitern (221, 222) und den zweiten Wellenleitern (231, 232) symmetrisch in Bezug auf die Referenzebene angeordnet ist.

4. Mikrowellenverzweigung in Form eines magischen T nach einem der vorhergehenden Ansprüche, wobei die Verzweigungen zwischen den kollinearen Armen (202, 203, 402, 403) der ersten Mikrowellenverzweigung und den ersten Wellenleitern (221, 222, 421, 422) und/oder die Verzweigungen zwischen den kollinearen Armen (212, 213, 412, 413) der zweiten Mikrowellenverzweigung und den ersten Wellenleitern (221, 222, 421, 422) Irisblenden oder Stufen auf den Krümmungen (251, 252, 440) umfassen.

5. Mikrowellen-Leistungsteiler, **dadurch gekennzeichnet, dass** er eine Mikrowellenverzweigung in Form eines magischen T (501) nach einem der Ansprüche 1 bis 4 umfasst, von der einer der Anschlüsse durch eine Last (502) abgeschlossen ist.

6. Netz von Mikrowellen-Strahlformern, **dadurch gekennzeichnet, dass** es eine Vielzahl von Mikrowellenverzweigungen in Form eines magischen T (601, 602, 603) nach einem der Ansprüche 1 bis 4 umfasst, die im Kaskadenbetrieb montiert sind, wobei einer der Anschlüsse jeder Mikrowellenverzweigung in Form eines magischen T durch eine Last (611, 612, 613) abgeschlossen ist.

7. Verfahren zum Herstellen einer Mikrowellenvorrichtung durch additive metallische Fertigung, wobei das Verfahren die folgenden Schritte umfasst:
- Erhalten eines Computermodells, das die Geometrie einer Mikrowellenverzweigung nach einem der Ansprüche 1 bis 4 oder einer Vielzahl von Mikrowellenverzweigungen nach einem der Ansprüche 1 bis 4, die im Kaskadenbetrieb montiert sind, darstellt,
- Steuern einer Vorrichtung zur additiven metallischen Fertigung zum Herstellen des Produkts entsprechend der in dem Computermodell spezifizierten Geometrie.

8. Computerprogrammprodukt, umfassend eine Reihe von Befehlen, die von einem Computer ausführbar sind, die, wenn sie von einem Prozessor ausgeführt werden, es dem Prozessor ermöglichen, eine Vorrichtung zur additiven metallischen Fertigung zu steuern, um eine Mikrowellenverzweigung in Form eines magischen T nach einem der Ansprüche 1 bis 4 herzustellen, oder um eine Vielzahl von Mikrowellenverzweigungen in Form eines magischen T nach einem der Ansprüche 1 bis 4 herzustellen, die im Kaskadenbetrieb montiert sind.

## Claims

1. A magic tee microwave junction, comprising a set of waveguides configured so as to form:
- a first E-plane tee microwave junction comprising a difference arm (201, 401) extending along a first axis (Ox) in a reference plane (xOz) and two collinear arms (202, 203, 402, 403) of the same length and that are symmetric about the reference plane,
- a second H-plane tee microwave junction comprising a sum arm (211, 411) extending along a second axis (O'z', Oz) orthogonal to the first axis (Ox) in the reference plane (xOz) and two collinear arms (212, 213, 412, 413) of the same length and that are symmetric about the reference plane,
- two first waveguides (221, 222, 421, 422) placed symmetrically about the reference plane (xOz), each first waveguide being connected, by one end, to the end of one of the collinear arms of the first microwave junction and, by the other end, to the end of one of the collinear arms of the second microwave junction,
- two second waveguides (231, 232, 431, 432) placed symmetrically about the reference plane (xOz), each second waveguide being connected to one of the first waveguides,
the difference arm of the first microwave junction forming the difference arm of the magic tee microwave junction, the sum arm of the second microwave junction forming the sum arm of the magic tee microwave junction, the second waveguides forming the side arms of the magic tee microwave junction.

2. The magic tee microwave junction according to claim 1, wherein a metal element (241, 242) is placed in the first microwave junction at the joining point between the difference arm (201) and the two collinear arms (202, 203) so as to adjust its properties and/or in the second microwave junction at the joining point between the sum arm (211) and the two collinear arms (212, 213) so as to adjust its properties.

3. The magic tee microwave junction according to any one of the preceding claims, wherein a metal element (243, 244) is placed at each junction between the first waveguides (221, 222) and the second waveguides (231, 232), symmetrically about the reference plane.

4. The magic tee microwave junction according to one of the preceding claims, wherein the junctions between the collinear arms (202, 203, 402, 403) of the first microwave junction and the first waveguides (221, 222, 421, 422) and/or the junctions between the collinear arms (212, 213, 412, 413) of the second microwave junction and the first waveguides (221, 222, 421, 422) comprise irises or steps on the elbows (251, 252, 440).

5. A microwave power divider, **characterised in that** it comprises a magic tee microwave junction (501) according to any one of claims 1 to 4, one of the ports of which is terminated by a load (502).

6. A microwave beamforming network, **characterised in that** it comprises a plurality of magic tee microwave junctions (601, 602, 603) according to any one of claims 1 to 4 connected in cascade, one of the ports of each magic tee microwave junction being terminated by a load (611, 612, 613).

7. The method for producing a microwave device through additive metal manufacturing, the method comprising the steps of:
- obtaining a computer model representing the geometry of a microwave junction according to any one of claims 1 to 4 or a plurality of microwave junctions according to any one of claims 1 to 4 connected in cascade,
- controlling an additive metal manufacturing device to produce the product corresponding to the geometry specified in the computer model.

8. A computer program product, comprising a series of computer-executable instructions that, when executed by a processor, allow the processor to control an additive metal manufacturing device to produce a magic tee microwave junction according to any one of claims 1 to 4, or a plurality of magic tee microwave junctions according to any one of claims 1 to 4 connected in cascade.
